(19) Europäisches Patentamt
European Patent Office
Office européen des brevets

(11) **EP 1 319 457 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**25.03.2015 Patentblatt 2015/13**

(45) Hinweis auf die Patenterteilung:
**07.05.2008 Patentblatt 2008/19**

(51) Int Cl.:
**B23F 23/10** (2006.01)

(21) Anmeldenummer: **02025260.7**

(22) Anmeldetag: **13.11.2002**

(54) **Verfahren zum spanenden Bearbeiten im wesentlichen zylindrischer, innen- oder aussenverzahnter Zahnräder**

Method of cutting substantially cylindrical internally or externally toothed gears

Procédé d'usinage de roues dentées essentiellement cylindriques à denture intérieure ou extérieure

(84) Benannte Vertragsstaaten:
**AT BE BG CH CY CZ DE DK EE ES FI FR GB GR IE IT LI LU MC NL PT SE SK TR**

(30) Priorität: **14.12.2001 DE 10162823**

(43) Veröffentlichungstag der Anmeldung:
**18.06.2003 Patentblatt 2003/25**

(73) Patentinhaber: **GLEASON-PFAUTER, Maschinenfabrik GmbH**
**71636 Ludwigsburg (DE)**

(72) Erfinder:
• **Fahrer, Siegfried**
 **71726 Benningen a/.N. (DE)**
• **Peiffer, Klaus, Dr.**
 **71634 Ludwigsburg (DE)**
• **Faulstich, Ingo, Dr.**
 **71634 Ludwigsburg (DE)**

(74) Vertreter: **Leinweber & Zimmermann**
**European Patent Attorneys**
**Patentanwälte**
**Rosental 7**
**80331 München (DE)**

(56) Entgegenhaltungen:
**DE-A- 3 712 454     DE-A- 19 631 620**
**DE-C3- 1 943 558**

• **SPUR G ET AL: "RECHNERUNTERSTUETZTE FEHLERKOMPENSATION AN CNC-SCHLEIFMASCHINEN" ZWF ZEITSCHRIFT FUR WIRTSCHAFTLICHE FERTIGUNG UND AUTOMATISIERUNG, CARL HANSER VERLAG. MUNCHEN, DE, Bd. 88, Nr. 9, 1. September 1993 (1993-09-01), Seiten 375-377, XP000396519 ISSN: 0947-0085**
• **"SINUMERIK 840D/840Di" Funktionsbeschreibung der Firma Siemens (Ausgabe 10.2000)**
• **I. N. BRONSTEIN ET AL.: 'Taschenbuch der Mathematik', Bd. 19, 1979, VERLAG HARRI DEUTSCH, FRANKFURT/MAIN Seiten 266 - 269**
• **'Raum- oder Gelenkkoordinaten - Konvertierungsalgorithmen von Orientierungsbeschreibungen' ZENTRALSCHWEIZERISCHEN TECHNIKUMS LUZERN Januar 1995, Seiten 1 - 3**
• **W. LOTZE: 'Zahnradmessung mit Koordinatenmessgeräten', 1987 Seiten 14,89 - 114,115**
• **Pfauter presents a new generation of CNC Profile Grinding Machines**
• **Zahnrad-Profilschleifmaschinen ZP 06 / ZP 08, vierseitiger Firmenprospekt der Firma Niles, Berlin, mit Angebotsunterlagen aus dem Jahr 1999 und einer Referenzliste**
• **Angebotsschreiben der Einsprechenden vom 18. Oktober 2001 mit Zeichnung als Anlage für eine Promat 700S**
• **Maschinenbedienung, 5.3 Prozess-Menü, Bedienungsanleitung der Einsprechenden für die Maschine Promat 700S, nachveröffentlicht**

EP 1 319 457 B2

- **Maschinenbedienung, 5.2 Datenverwaltungs-Menü, Bedienungsanleitung der Einsprechenden für die Maschine Promat 700S, nachveröffentlicht**
- **Helix 400 / Promat 400, Ausführungsvarianten, Standard und kk, Firmenprospekt der Einsprechenden, nachveröffentlicht 4/2005**
- **Helix 700, Ausführungsvarianten Promat, Standard und kk, Firmenprospekt der Einsprechenden, nachveröffentlicht 4/2005**
- **Fräsen von Turbinenschaufen mit Siemens 840D Präsentation eines Applikationsprojekts bei den Firmen Dr. Hagen / Lappersdorf und GEC ALSTHOM / Nürnberg vom 05.06.1996**

**Beschreibung**

Die Erfindung betrifft ein Verfahren zum spanenden Bearbeiten im wesentlichen zylindrischer, innen- oder außenverzahnter Zahnräder nach dem Oberbegriff des Anspruches 1.

Eine wesentliche Voraussetzung für einwandfreies Laufen eines Zahnrades im Getriebe besteht darin, daß die Verzahnung zentrisch zu seiner Führungsachse, der späteren Drehachse im Getriebe, erzeugt wird, daß also Verzahnungs- und Führungsachse des Rades praktisch zusammenfallen. Dazu muß das zu bearbeitende Werkstück so auf der Bearbeitungsmaschine ausgerichtet werden, daß Führungsachse des Rades und Drehachse der Maschine im Rahmen einer vorgegebenen Toleranz zusammenfallen, denn die Verzahnung wird dem Stand der Technik entsprechend um die Drehachse der Maschine erzeugt. Damit fallen, solange sich das Werkstück verzahnt auf der Maschine befindet, Verzahnungsachse des Werkstückes und Drehachse der Maschine zusammen. Der Vorgang des Ausrichtens ist zeitaufwendig, besonders bei großen, schweren Rädern. Diese können mehrere Tonnen Gewicht haben. Beim Versuch, ein schweres Werkstück auf der Maschine in eine bestimmte Richtung zu verschieben, bewegt es sich häufig, zum Beispiel aufgrund ungleicher Reibung über der Auflagefläche, in eine andere Richtung. Trotz großer Bemühungen existiert bis heute kein zufriedenstellendes Verfahren zum schnellen, zuverlässigen Ausrichten schwerer Zylinderräder auf der Verzahnmaschine.

Es ist ein diskontinuierliches Wälzverfahren für das Bearbeiten von Geradverzahnungen bekannt (DE 37 12 454 A). Hierbei wird unabhängig vom Taumeln der Verzahnung auf der Bearbeitungsmaschine die Außermittigkeit der Verzahnung in nur einer Ebene bestimmt. Die Auswirkung dieser Außermittigkeit in dieser einen Ebene auf die Verzahnung wird dadurch verkleinert, daß für das Bearbeiten jeder Flanke ein Korrekturwert für die Wälzbewegung und ein Korrekturwert für die Teilbewegung den Bewegungen beim Bearbeiten einwandfrei aufgespannter Werkstücke überlagert wird und damit das Bearbeiten erfolgt. Die Lage der Führungsachse wird dabei gar nicht betrachtet.

Es ist ein Profilschleifen zylindrischer Zahnräder bekannt (DE 196 31 620 A), bei dem die Führungsachse des Rades, die später im Getriebe die Drehachse werden soll, während der Bearbeitung nicht mit der Drehachse des Werkstückes zusammenfällt. Bei diesem Verfahren soll die tatsächliche Lage der Führungsachse auf der Bearbeitungsmaschine messtechnisch bestimmt werden. Die Verzahnung soll dadurch einwandfrei bearbeitet werden, dass den dem Stand der Technik entsprechenden Bewegungen Korrekturbewegungen überlagert werden, die aus der Lage der Führungsachse zur Drehachse auf der Maschine hergeleitet werden.

Um diese Korrekturbewegungen durchführen zu können, sind Maschinen erforderlich, die Achsen benötigen, die keine der zur Zeit bekannten Maschinen zum Profilschleifen besitzt.

Aus der geschilderten Situation ergibt sich die Aufgabe, ein Verfahren anzugeben, das es ermöglicht, mit geringem Aufwand sicherzustellen, daß die Verzahnungsachse eines Zahnrades praktisch mit der Führungsachse des Rades zusammenfällt.

Diese Aufgabe wird erfindungsgemäß mit den Merkmalen des Anspruches 1 gelöst.

Das erfindungsgemäße Verfahren nach Anspruch 1 ist ein Profilstoß- oder Wälzstoßverfahren, bei dem nur die Achsen X (Achsabstand Werkzeug - Werkstück), Z (Position des Werkzeuges in Richtung der Werkstückachse), $C_0$ (Drehung des Werkzeuges) und $C_2$ (Drehung des Werkstückes) genutzt werden.

Die Erfindung wird anhand der Zeichnungen näher erläutert. Es zeigen,

Fig. 1    in schematischer und perspektivischer Darstellung eine Bearbeitungsmaschine mit drei linearen und drei rotatorischen Achsen zur Bearbeitung von Zahnrädern.

Fig. 2    ein Verfahren zur Bestimmung der Lage der Radführungsachse des Werkstückes zur Drehachse auf der Bearbeitungsmaschine gemäß Fig. 1 bzw. Fig. 6.

Fig. 3    in schematischer Darstellung verschiedene Stellungen eines scheibenförmigen Profilwerkzeuges relativ zum zu bearbeitenden Werkstück mit einer großen Breitenballigkeit,

Fig. 4    eine Flanke einer Schrägverzahnung eines Werkstückes mit einer Kontaktlinie KL zwischen Werkzeug und Werkstück sowie eine Schnittlinie S senkrecht zur Führungsachse des Werkstückes,

Fig. 5    Korrekturgrößen zur Bearbeitung eines außermittig aufgespannten Werkstückes auf einer Maschine nach Fig. 1,

Fig. 6    in schematischer Darstellung eine Bearbeitungsmaschine mit zwei linearen und zwei rotatorischen Achsen zur Bearbeitung von Zahnrädern mit Außen- bzw. Innenverzahnung,

Fig. 7    Korrekturgrößen zur Bearbeitung eines außermittig aufgespannten Werkstückes mit Außenverzahnung auf einer Maschine nach Fig. 6,

Fig. 8    Korrekturgrößen zur Bearbeitung eines außermittig aufgespannten Werkstückes mit Innenverzahnung auf einer Maschine nach Fig. 6.

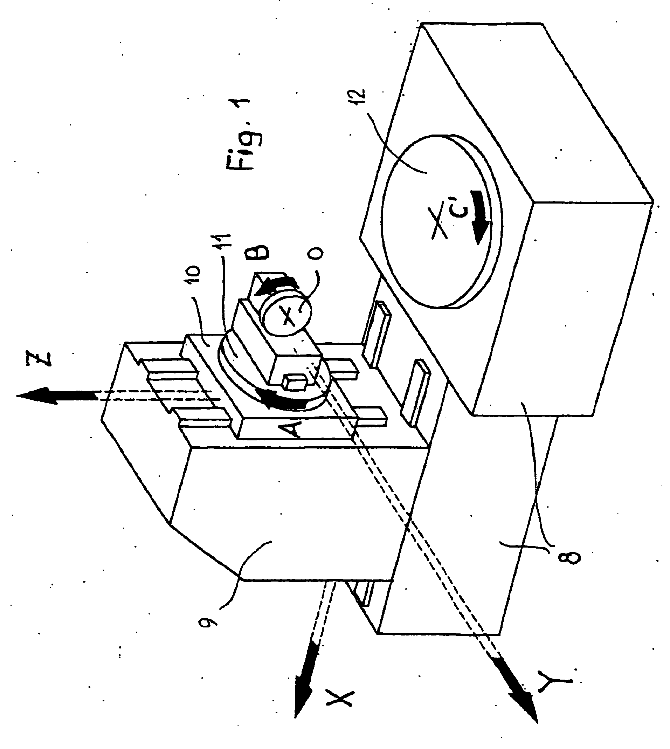

Fig. 1 zeigt in schematischer Darstellung den grundsätzlichen Aufbau einer Verzahnmaschine. Sie hat ein Bett 8, das aus einem Tisch- und einem Ständerunterteil besteht, auf dem ein Radialschlitten 9 in X-Richtung verfahrbar ist. Der Radialschlitten 9 trägt einen Axialschlitten 10, der in Z-Richtung verfahrbar ist. Auf dem Axialschlitten 10 befindet sich ein Schwenkkopf 11, der um eine Achse A schwenkbar ist. Der Schwenkkopf 11 trägt ein entsprechendes Werkzeug 0 mit einem entsprechenden Antrieb, mit dem das Werkzeug 0 um die B-Achse drehbar ist. Das Werkzeug ist in Richtung seiner Achse, also in Y-Richtung, verschiebbar.

Auf dem Tischunterteil befindet sich der Tisch 12, der um die C-Achse drehbar ist und auf dem das zu bearbeitende Werkstück aufgenommen werden soll. Anstelle des Drehwinkels C ist in Fig. 1 der Winkel C' angegeben. Es gilt C' = -C. Der Strich an einer der Achsen deutet darauf hin, dass Bewegungen dieser Achse vom Werkstück ausgeführt werden. Eine Bewegung in C' des Werkstükkes entspricht einer Bewegung des Werkzeuges gleichen Betrages C.

Das Werkzeug ist hier sehr vereinfacht angedeutet; es ist nur ein Zylinder dargestellt.

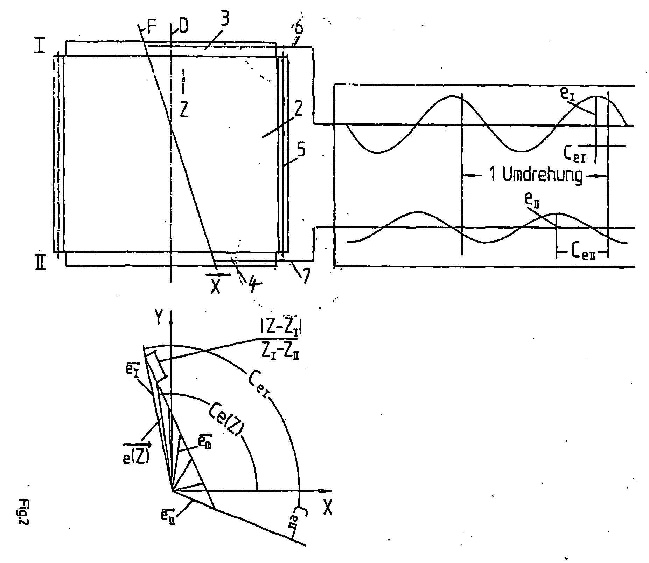

Man kann die Lage der Führungsachse F des Rades 2 zur Drehachse D auf der Bearbeitungsmaschine - zum Beispiel durch Messen der Rundlaufabweichungen an zwei Rundlaufprüfbunden 3, 4 und entsprechende Auswertung der Meßsignale bestimmen (Fig. 2). Angenommen, der Prüfbund 3 sei oberhalb, der zweite unterhalb der Verzahnung 5 am Grundkörper des Rades 2 angebracht, und die Auslenkung des jeweiligen Meßtasters 6, 7 erfolge in Richtung X-Achse. Die obere Meßebene I liegt bei $Z_I$, die untere bei $Z_{II}$. Während der Meßwertaufnahme drehe das Rad 2. Die Meßwerte werden zeitgleich oder nacheinander in beiden Meßebenen I, II aufgenommen und in einem Rechner gespeichert; sie sind zur Veranschaulichung des Verfahrens in Fig. 2 mit einem Schreiber aufgezeichnet. Jeder Nulldurchgang des Drehtisches (C = 0 zum Beispiel bei X) wird im Diagramm markiert bzw. im Rechner gespeichert. Man bestimmt eine sinusförmige Ausgleichskurve durch jedes der Diagramme mit jeweils einer Periode je Umdrehung. Die beiden Signale I und II seien so aufgetragen, dass positive breiche "mehr Material" kennzeichnen und im Diagramm "nach oben" weisen. Im Maximum des Diagrammes I (II) lassen sich der Betrag und die Phasenlage der Außermittigkeit $e_I$ ($e_{II}$) ablesen. $\vec{e_I}$ und $\vec{e_{II}}$ lassen sich als Ortsvektoren auffassen und dem Drehtisch der Maschine (für das gerade betrachtete Werkstück) zuordnen. Man erhält so eine Darstellung wie im linken Teil Fig. 2. Aus ihr lassen sich berechnen:

Die Außermittigkeit $\vec{e_m}$ in Zahnbreitenmitte, der Kreuzungswinkel $\tau$ zwischen der Drehachse D und der Führungsachse F, die Außermittigkeit $\vec{e(Z)}$ für beliebige Ebenen Z senkrecht zur Drehachse D und der Phasenwinkel $C_e(Z)$:

Es gilt:

$$\vec{e_m} = \frac{1}{2}\left(\vec{e_I} + \vec{e_{II}}\right)$$

$$\tau = \frac{|\vec{e_I} - \vec{e_{II}}|}{Z_I - Z_{II}}$$

$$\vec{e(Z)} = \vec{e_I} + (\vec{e_{II}} - \vec{e_I}) \cdot \frac{|Z - Z_I|}{Z_I - Z_{II}}$$

$$C_e(Z) = \arctan(e_y(Z)/e_x(Z)),$$

wobei $e_x(Z)$ und $e_y(Z)$ die Komponenten von $\overrightarrow{e(Z)}$ in Richtung der Achsen X bzw. Y sind.

Soll eine "beliebige" Bahn des Werkzeuges relativ zum Werkstück gefahren werden, so sind neben translatorischen Bewegungen in X-, Y-, Z-Richtung Drehungen um die Achsen A, B und C erforderlich. Die translatorischen Achsen sowie die Achsen A und C bedürfen keiner Erläuterung. Eine Drehung um B ist bei den diskontinuierlichen Profilverfahren und bei den übrigen Verfahren mit rotierendem Werkzeug ohne Hubbewegung, wie sie zum Beispiel beim Stoßen auftritt, zur Erzeugung der Schnittgeschwindigkeit erforderlich. Die Drehzahl des Werkzeuges kann jedoch normalerweise in weiten Grenzen geändert werden, ohne die erzeugte Geometrie des Werkstückes zu beeinflussen. Diese Drehung kann also nicht zur Erzeugung einer "beliebigen" Bewegung herangezogen werden.

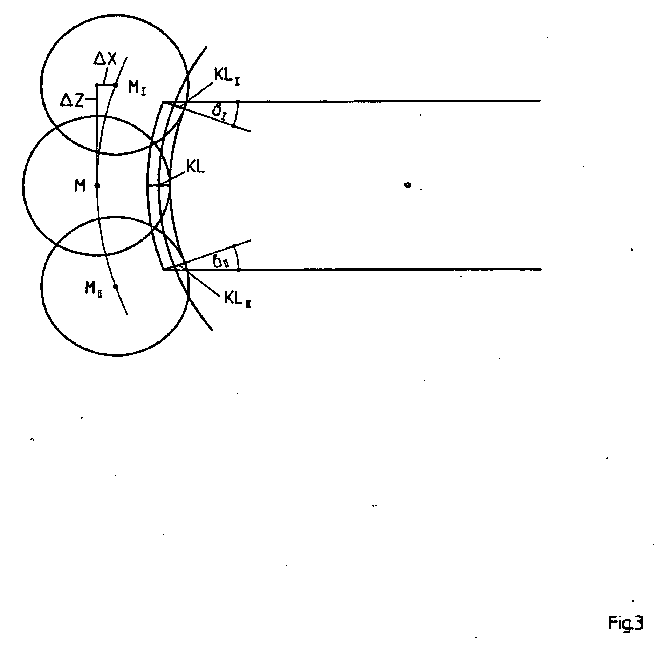

Anhand eines einfachen Beispieles sei erläutert, was im vorliegenden Fall unter Drehung zu verstehen ist. Die Figur 3 zeigt in vereinfachter Darstellung für das diskontinuierliche Profilverfahren mit scheibenförmigem Werkzeug einen Axialschnitt durch eine "geradverzahnte" Kupplungsverzahnung und gleichzeitig für drei werkstückaxiale Stellungen einer Profilschleifscheibe einen Blick auf das Werkzeug in Richtung der Werkzeugdrehachse. Die Kontaktlinie KL zwischen Werkzeug und Werkstück verläuft in Zahnbreitenmitte horizontal; sie ist oben um $\delta_I$ und unten um $\delta_{II}$, in entgegengesetztem Drehsinn gegenüber der horizontalen Lage, gedreht. Diese Drehung der Kontaktlinie KL kann man als Drehung auf dem nicht rotierenden Werkzeughüllkörper aufgrund seiner translatorischen Bewegung auf der Bahn $M_{II}$, M, $M_I$ betrachten. Diese Drehung um die Y-Achse, also die Drehung der B-Achse ohne den zur Erzeugung der Schnittgeschwindigkeit erforderlichen Anteil, wird zur Beschreibung einer "beliebigen" Bahn des Werkzeuges relativ zum Werkstück 2 benötigt. Die Drehung wird allerdings nicht über die B-Achse programmiert; vielmehr ergibt sie sich, wie aus Fig. 3 hervorgeht, automatisch aufgrund der Bahn, auf der die Werkzeugdrehachse während der Bearbeitung relativ zum Werkstück bewegt wird.

Da die Maschine in bestimmtem Maße Bewegungsmöglichkeiten in Richtung der drei translatorischen und der drei rotatorischen Freiheitsgrade einer allgemeinen Bewegung besitzt, ist sie bei entsprechender Programmierung in der Lage, eine zylindrische Verzahnung zu erzeugen, deren Achse nicht mit der Drehachse auf der Maschine zusammenfällt.

Wie man die dazu erforderlichen Einstelldaten ED ermittelt, spielt keine Rolle. Man kann zum Beispiel zunächst einmal annehmen, die Drehung des Werkstückes um die Führungsachse F und die Verschiebung des Werkzeuges in Richtung der Führungsachsen F, die während der Bearbeitung des Werkstückes ausgeführt werden müssen, seien an der Maschine unmittelbar realisierbar. Man kann dann entsprechend dem Stande der Technik die Einstelldaten festlegen und diese dann auf das tatsächlich an der Maschine vorhandene Koordinatensystem übertragen. Dazu verschiebt man die einzelnen Größen so senkrecht zur Drehachse D, dass sich die Führungsachse F und die Drehachse D zum Beispiel in Zahnbreitenmitte schneiden und kippt sie anschließend um den Kreuzungswinkel von Führungsachse F und Drehachse D so, dass die Führungsachse F und die Drehachse D zusammenfallen. Mit den so erhaltenen Positionen, Bahnen und Geschwindigkeiten, die sich nun aus Komponenten in Richtung der tatsächlich vorhandenen Maschinenachsen zusammensetzen, kann man anschließend das Werkstück bearbeiten.

Man kann die Einstelldaten ED auch iterativ auf einem Rechner ermitteln. Ein Weg dazu ist im folgenden für das diskontinuierliche Profilverfahren mit scheibenförmigem Werkzeug skizziert:

Man

- beschreibt die Verzahnung 5 wie üblich um die Drehachse D der Maschine;

- verschiebt und kippt die Verzahnung 5, so dass Verzahnungsachse und Führungsachse F zusammenfallen,

- positioniert das Werkzeug 0 in der Ausgangslage zum Beispiel so, wie zum Bearbeiten bei exakt ausgerichtetem Werkstück 2,

- ermittelt die jeweilige Kontaktlinie KL zwischen Werkzeug 0 und Werkstück 2, wobei die Richtung der jeweiligen Flankennormalen aus der Lage der Flanken in der gekippten, außermittigen Lage bestimmt wird (zum Beispiel in einem Punkt P der Flanke als Kreuzprodukt der Tangenten an die Evolvente durch P und die Tangente an die Schraublinie durch P),

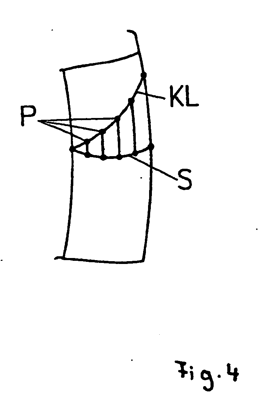

- schraubt die Punkte der Kontaktlinie KL in den Stirnschnitt S der Verzahnung 5 um die Führungsachse F (Fig. 4),

- bestimmt die Abweichungen in Profil und Aufmaß zum jeweiligen Sollwert und

- leitet daraus Korrekturwerte in X, Y, Z, A und C iterativ so ab, dass Profil und Aufmaß innerhalb vorgegebener Toleranzen liegen,

- • wiederholt den Rechenvorgang für axial versetzte und entsprechend der Zahnschräge gedrehte Positionen,

- • ermittelt aus den Korrekturwerten Stützpunkte für die resultierenden Bahnen und aus diesen Stützpunkten durch Interpolation die resultierenden Bahnen des Werkzeuges 0 in den einzelnen Lücken;

- • ermittelt die Abweichungen der Flankenlinie,

- • leitet gegebenenfalls Korrekturwerte in X, Y, Z, A und C iterativ so ab, dass neben Profil und Aufmaß auch die Flankenlinie innerhalb der vorgegebenen Toleranz liegt und

- • wiederholt den Vorgang für alle Zahnlücken.

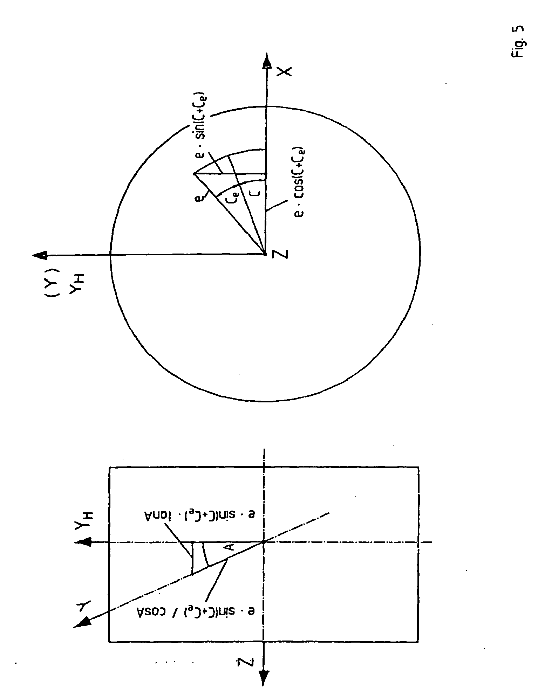

Das vorstehend erläuterte Beispiel betraf eine allgemeine Lageabweichung der Führungsachse F in bezug auf die Drehachse D. Diese Lage ist dadurch gekennzeichnet, dass die beiden Achsen D und F windschief zueinander liegen. In der Praxis besitzt ein Sonderfall der Fehlpositionierung dieser Achsen große Bedeutung. Dieser Fall ist dadurch gekennzeichnet, dass Führungsachse F und Drehachse D parallel in einem bestimmten Abstand e zueinander liegen. Für diesen Fall lassen sich die Einstelldaten ED leicht angeben. Alle Punkte der Führungsachse F beschreiben bei einer Drehung des Werkstückes auf der Bearbeitungsmaschine eine Kreisbahn um die Drehachse D. Allerdings besteht diese Bewegung auf der Kreisbahn nicht aus einer Drehung, sondern aus einer rein translatorischen Bewegung der Führungsachse F auf dieser Kreisbahn. Um die Verzahnung 5 dennoch zentrisch in bezug auf die Führungsachse F des Werkstückes zu erzeugen, sind an der Bearbeitungsmaschine Korrektureinstellungen erforderlich (s. Fig. 5).

Die Außermittigkeit, also der Abstand der beiden Achsen F und D, wird nach Betrag e und Phasenwinkel $C_e$ zur Null-Drehlage des Tisches der Bearbeitungsmaschine bestimmt. Der Drehwinkel C = 0 liegt im Beispiel nach Fig. 5 auf der X-Achse. Den momentanen Positionen der einzelnen Achsen bei einwandfrei aufgespanntem Werkstück werden folgende Korrekturen während der Bearbeitung des außermittigen Werkstückes überlagert:

$$\Delta X = e \cdot \cos (C + C_e)$$

$$\Delta Y = e \cdot \sin (C + C_e) / \cos A$$

$$\Delta Z = e \cdot \sin (C + C_e) \cdot \tan A.$$

Die Lage der Führungsachse F des Werkstückes zur Drehachse D auf der Bearbeitungsmaschine kann in gleicher Weise bestimmt werden wie beim vorigen Beispiel. Im vorliegenden Sonderfall sind die Außermittigkeiten e in den beiden Meßebenen I und II jedoch nach Betrag und Phase gleich, d.h. die beiden in Fig. 2 dargestellten Kurven lassen sich im vorliegenden Fall durch Verschieben in Ordinatenrichtung zur Deckung bringen.

Die angegebenen Gleichungen zeigen, dass bei Bearbeitung einer Geradverzahnung keine Korrekturbewegung in Z-Richtung erforderlich ist, wenn das Werkzeug in der üblichen Art für einen Schwenkwinkel A = 0 ausgelegt ist.

Für eine reine Außermittigkeit des Werkstückes auf der Bearbeitungsmaschine führt das beschriebene Verfahren zu einer exakten Lösung. In vielen Fällen kann man jedoch im allgemeinen Fall, bei dem die Drehachse D und die Führungsachse F windschief zueinander liegen, auf die Kompensation des Mittentaumels verzichten und nach einem leicht modifizierten Verfahren arbeiten. Erläutert sei dies für das Profilschleifen mit scheibenförmigem Werkzeug.

Während das eingangs erläuterte Verfahren aufwendig, aber theoretisch exakt ist, wird mit dem im folgenden beschriebenen Verfahren eine für viele Anwendungsfälle völlig ausreichende Genauigkeit erzielt, insbesondere wenn die Werkstückaufnahme auf der Bearbeitungsmaschine eine geringe Planlaufabweichung besitzt und die axiale Auflagefläche des Werkstückes in enger Toleranz senkrecht zur Führungsachse F gefertigt ist. Auch bei diesem Verfahren wird, wie beim eingangs erläuterten Verfahren, die Lage der Radführungsachse F zur Drehachse D zum Beispiel auf der Bearbeitungsmaschine durch Messung der Rundlaufabweichungen in den Meßebenen I und II bestimmt. Die Außermittigkeit e wird jedoch nicht nur in den beiden Meßebenen I und II bestimmt, sondern, wie vorher erläutert, auf rechnerischem Wege auch in Zwischenebenen senkrecht zur Drehachse D. In jeder Zwischenebene wird zunächst das zuvor beschriebene Verfahren für parallele Lage von Führungsachse F zu Drehachse D angewendet, allerdings mit dem in jeder Ebene vorliegenden Betrag e(Z) und Phasenwinkel $C_e(Z)$ der Außermittigkeit. Mit diesen Daten wird nunmehr die Verzahnung auf dem Rechner beschrieben, und es werden die Abweichungen in Profil und Flankenlinie um die Führungsachse F ermittelt. Weisen die Ergebnisse unzulässig große Abweichungen auf, so werden diese mit bekannten Mitteln dynamisch kompensiert. Die bekannten Mittel sind zum Beispiel in DE 41 12 122 C2 angegeben. Man wendet diese Mittel auf Stützpunkte an, die zur endgültigen Bearbeitung über Interpolation zu Bahnen zusammengefaßt werden und damit zur dynamischen Änderung der Einstelldaten führen. Zum Beispiel führt eine Fehleinstellung $\Delta A$ zu einer Profilwinkelabweichung mit gleichem Vorzeichen auf beiden Werkstückflanken. Diese Profilwinkelabweichungen lassen sich über eine Korrektur im Achsabstand vermeiden. Dadurch ändert sich allerdings die Zahndicke und, da diese sich über der Zahnbreite ändert, auch die Flankenlinienabweichung. Sollte dies zu einer Toleranzüberschreitung führen, muß zumindest der Schlichtschnitt in Einflankenbearbeitung erfolgen. Alternativ kann man allerdings auch eine dynamische Anpassung des Schwenkwinkels vornehmen. Diese wäre allerdings in jeder C-Position des Tisches unterschiedlich. Mit den so ermittelten Korrekturwerten wird dann die Verzahnung am Werkstück fertig bearbeitet. Bei diesem Verfahren verbleibt eine sehr geringe Schwankung der Höhenballigkeit über dem Umfang des Werkstückes. Diese läßt sich nicht vermeiden. Sollte sie im Ausnahmefall zu groß sein, kann das Werkzeug so ausgelegt werden, dass eine geringe positive Profilballigkeit erzeugt wird, so dass die Höhenballigkeit nicht negativ werden kann. Bei Werkstücken, die ohnehin eine Profilballigkeit besitzen sollen, geht die hier erwähnte Schwankung allerdings in der Toleranz unter.

Bei einem Werkstück mit Geradverzahnung, das im Profilverfahren mit scheibenförmigem Werkzeug bearbeitet werden soll, bei dem die Führungsachse F und die Drehachse D der Bearbeitungsmaschine windschief zueinander liegen, kann das Verfahren ebenfalls angewendet werden. Es ergeben sich hierbei außerordentlich einfache Lösungen, weil das Werkstück während der Bearbeitung nicht dreht. Man projiziert die Führungsachse F in die Y-Z-Ebene und ermittelt hieraus für die entsprechende Zahnlücke die erforderliche Bewegung $\Delta Y = f(Z)$. Außerdem projiziert man die Führungsachse F in die X-Z-Ebene und ermittelt hieraus für die entsprechende Zahnlücke die notwendige Bewegung $\Delta X = f(Z)$. Im vorliegenden Fall sind $\Delta X$ und $\Delta Y$ jeweils proportional zu Z; die Proportionalitätsfaktoren sind in jeder Winkelstellung C des Tisches verschieden.

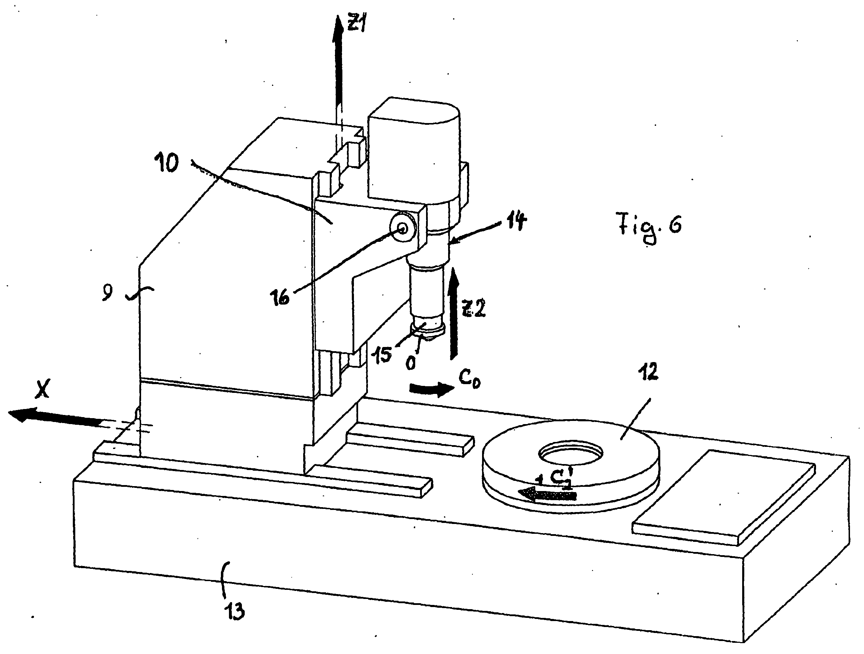

Wälz- und Profilstoßmaschinen besitzen normalerweise zumindest die Achsen X, Z, $C_0$, $C_2$. Fig. 6 zeigt in schematischer Darstellung den grundsätzlichen Aufbau einer Wälzstoßmaschine. Sie hat ein Bett 13, auf dem ein Radialschlitten 9 in X-Richtung verfahrbar ist. Der Radialschlitten 9 trägt einen Axialschlitten 10, der in Z1-Richtung positionierbar ist. Der Axialschlitten 10 trägt eine Stoßeinheit 14, die mit dem Axialschlitten 10 in Z1-Richtung positioniert wird. Außerdem besitzt die Stoßeinheit 14 eine Stoßspindel 15, die ein entsprechendes Werkzeug 0 trägt und in Z2-Richtung unabhängig von Z1 eine Hubbewegung während des Bearbeitungsvorganges ausführen kann. Damit bei der Rückhubbewegung das Werkzeug 0 außer Eingriff vom zu bearbeitenden Werkstück gelangen kann, ist die Stoßeinheit 14 um eine senkrecht zur Z1/Z2-Richtung liegende Achse 16 schwenkbar am Axialschlitten 10 gelagert. Das zu bearbeitende Werkstück wird, gegebenenfalls mit Hilfe einer Aufspannvorrichtung, auf einem Drehtisch 12 aufgenommen, der um die C2'-Achse drehbar ist. Auf derartigen Maschinen lässt sich das erfindungsgemäße Verfahren ausführen.

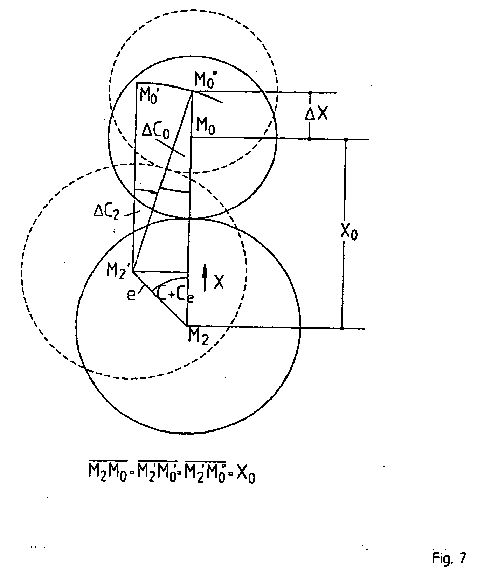

Verlaufen Führungsachse F und Drehachse D parallel zueinander, so sind der Abstand e dieser Achsen (Außermittigkeit) und der Phasenwinkel $C_e$, zum Beispiel auf der Maschine, zu ermitteln. Die erforderlichen Korrekturen lassen sich aus Fig. 7 herleiten. In der gestrichelten Stellung ist die Führungsachse aus der Stellung $M_2$ in die Stellung $M_2'$ verschoben. Würde die Maschine neben der X-Achse noch eine Y-Achse besitzen, könnte man $M_0$ nach $M_0'$ verschieben. Tatsächlich kann $M_0$ aber nur in Richtung X verschoben werden. Diese Verschiebung muss so groß sein, dass der Abstand zwischen Führungsachse des Werkstückes und Drehachse des Werkzeuges, also $\overline{M_2'M_0''}$ gleich dem Nennachsabstand $X_0$ bei einwandfrei ausgerichtetem Werkstück ist. $\overline{M_2'M_0''}$ verläuft nicht parallel zu $\overline{M_2M_0}$.

Sowohl das Werkzeug als auch das Werkstück müssen deshalb eine Korrekturdrehung ausführen. $\Delta C_0$ und $\Delta C_2$ besitzen dabei gleichen Betrag und gleiches Vorzeichen. Es gilt, sofern C=0 auf der X-Achse liegt:

$$\Delta C_0 = \Delta C_2 = -\text{arc sin } \frac{e \cdot \sin(C + C_e)}{X_0} \approx \frac{-e \cdot \sin(C + C_e)}{X_0}$$

$$\Delta X = e \cdot \cos(C + C_e) - X_0 \cdot (1 - \cos \Delta C_2)$$

Falls Führungsachse F und Drehachse D nicht parallel, sondern windschief zueinander liegen, ist das Verfahren leicht zu modifizieren. Außermittigkeit und Phasenwinkel sind in diesem Fall wieder in Abhängigkeit von der Lage der jeweiligen Stirnschnittebene Z zu ermitteln. In den Gleichungen für das Bearbeiten mit rein außermittiger Aufspannung sind dann lediglich e durch e(Z) und $C_e$ durch $C_e(Z)$ zu ersetzen.

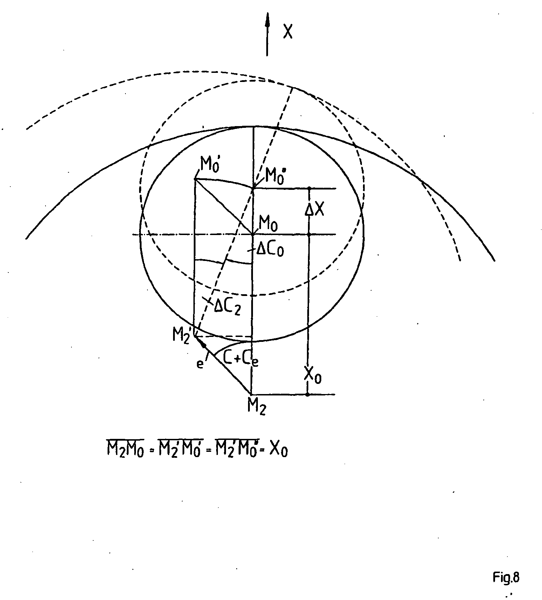

Wie aus Fig. 8 hervorgeht, gelten für Innenverzahnungen, die im . Profilstoß- oder Profilwälzverfahren hergestellt werden, dieselben Gleichungen wie für Außenverzahnung.

Bei den beschriebenen Verfahren wird die Verzahnung um die gegebenenfalls zur Drehachse D der Bearbeitungsmaschine windschief liegende Führungsachse F erzeugt. Diese Vorgehensweise läßt sich allgemein auf Werkstücke anwenden, bei denen am Umfang mindestens ein Profil in Richtung ihrer zu definierenden Achse erzeugt oder um diese geschraubt werden soll, wenn diese Achse auf der Bearbeitungsmaschine nicht mit der Drehachse der Maschine zusammenfällt. Die Verfahren lassen sich außerdem auf andere Fertigungsverfahren anwenden, zum Beispiel auf das Verzahnen von Schneckenrädern. Sie lassen sich zudem übertragen auf Verfahren zur Bearbeitung von stark konischen "Zylinderrädern" (sogenannte Beveloidverzahnungen), Kegelräder, Kronenräder, usw.

Das Grundprinzip der Erfindung lässt sich sogar auf Fälle übertragen, in denen die Führungsachse F, die im Getriebe Drehachse werden soll, bei der Fertigung nicht mit der Drehachse D zusammenfallen soll. Diese Situation ist zum Beispiel bei elliptischen Rädern gegeben, die um eine Achse durch den Ellipsen-Mittelpunkt gefertigt werden, aber im Getriebe um einen der beiden Brennpunkte drehen.

Bei den beschriebenen und dargestellten Ausführungsformen liegen die linearen und zum Teil auch die rotatorischen Achsen senkrecht zueinander. Die Verfahren lassen sich selbstverständlich auch auf Maschinen durchführen, bei denen die Achsen nicht senkrecht zueinander liegen. Bedingung ist lediglich, dass die linearen und die rotatorischen Achsen jeweils nicht in einer Ebene liegen und dass keine zwei der linearen bzw. der rotatorischen Achsen parallel zueinander liegen.

## Patentansprüche

1. Verfahren zum spanenden Bearbeiten im wesentlichen zylindrischer, innen- oder außenverzahnter Zahnräder, bei dem das Werkstück nicht exakt auf der Bearbeitungsmaschine ausgerichtet ist, bei dem also die Radführungsachse (F), die später im Getriebe Drehachse werden soll, nicht mit der Drehachse (D) auf der Bearbeitungsmaschine zusammenfällt und demzufolge bei drehendem Tisch bzw. drehender Werkstückspindel die Radführungsachse (F) um die Drehachse (D) "taumelt", wobei die Lage der Radführungsachse (F) zur Drehachse (D) der Bearbeitungsmaschine bestimmt und die Verzahnung um die Radführungsachse (F) erzeugt wird,
**dadurch gekennzeichnet, dass**

   • das Bearbeitungsverfahren ein Profilstoß- oder Wälzstoßverfahren ist und
   • nur die Achsen

   X für Achsabstand Werkzeug - Werkstück
   **Z** für Position des Werkzeuges in Richtung der Werkstückachse
   $C_0$ für Drehung des Werkzeuges
   $C_2$ für Drehung des Werkstückes genutzt werden, und

   • die Lage der Radführungsachse (F) zur Drehachse (D) der Bearbeitungsmaschine über e(Z) und $C_e(Z)$ bestimmt wird, wobei Z die jeweils betrachtete Ebene senkrecht zur Drehachse (D), $C_e(Z)$ der Phasenwinkel der Außermittigkeit e(Z) in der Ebene (Z) ist und
   • den zum Bearbeiten eines einwandfrei aufgespannten Werkstückes erforderlichen Bewegungen Korrekturen überlagert werden, wobei für den Fall, dass der Drehwinkel C = 0 auf der X-Achse liegt, die Korrekturen folgende Werte annehmen:

$$\Delta C_0(Z) = \Delta C_2(Z) = -arc \sin \frac{e(Z) \cdot \sin(C + C_e(Z))}{X_0} \approx \frac{-e(Z) \cdot \sin(C + C_e(Z))}{X_0}$$

$$\Delta X(Z) = e(Z) \cdot \cos(C + C_e(Z)) - X_0 \cdot (1 - \cos \Delta C_2(Z)),$$

• wobei $X_0$ den Achsabstand Werkzeug - Werkstück bei einwandfreier Aufspannung des Werkstückes kennzeichnet, und
• mit den so überlagerten Einstelldaten (ED) das Werkstück bearbeitet wird.

2. Verfahren nach Anspruch 1,
**dadurch gekennzeichnet, dass**

• das Werkstück rein außermittig aufgespannt ist,
• die Außermittigkeit nach Betrag (e) und Phasenwinkel ($C_e$) bestimmt wird und
• nur die Achsen

X für Achsabstand Werkzeug - Werkstück
Z für Position des Werkzeuges in Richtung der Werkstückachse
$C_0$ für Drehung des Werkzeuges
$C_2$ für Drehung des Werkstückes

genutzt werden, und
• den zum Bearbeiten eines einwandfrei aufgespannten Werkstückes erforderlichen Bewegungen Korrekturen überlagert werden, wobei für den Fall, dass der Drehwinkel C = 0 auf der X-Achse liegt, die Korrekturen folgende Werte annehmen:

$$\Delta C_0 = \Delta C_2 = -\arcsin \frac{e \cdot \sin(C + C_e)}{X_0} \approx \frac{-e \cdot \sin(C + C_e)}{X_0}$$

$$\Delta X = e \cdot \cos(C + C_e) - X_0 \cdot (1 - \cos \Delta C_2),$$

wobei $X_0$ den Achsabstand Werkzeug - Werkstück bei einwandfreier Aufspannung des Werkstückes kennzeichnet, und

• mit den so überlagerten Einstelldaten (ED) das Werkstück bearbeitet wird.

**Claims**

1. A method of cutting substantially cylindrical, internally or externally toothed gearwheels, in which the workpiece is not orientated precisely on the cutting machine, and in which the wheel-guiding axis (F), which is subsequently to become the axis of rotation in the gear mechanism, does not therefore coincide with the axis of rotation (D) on the cutting machine and, as a result, the wheel-guiding axis (F) "wobbles" around the axis of rotation (D) when the bench or the workpiece spindle is rotating, wherein the position of the wheel-guiding axis (F) is determined with respect to the axis of rotation (D) of the cutting machine and the set of teeth is produced about the wheel-guiding axis (F),
**characterized in that**
▪ the cutting method is a gear-shaping method, and
▪ only the axes
X for the axial distance between the tool and the workpiece
Z for the position of the tool in the direction of the workpiece axis
$C_0$ for the rotation of the tool
$C_2$ for the rotation of the workpiece are used, and
▪ the position of the wheel-guiding axis (F) with respect to the axis of rotation (D) of the cutting machine is determined by way of e(Z) and $C_e$(Z), in which Z is the plane - observed in each case - at a right angle to the axis of rotation (D), and $C_e$(Z) is the phase angle of the eccentricity e(Z) in the plane (Z), and
▪ corrections are superimposed upon the movements required for cutting a workpiece clamped in a trouble-free manner, in which the corrections assume the following values in the case in which the angle of rotation C = 0 is situated on the X axis:

$$\Delta C_0(Z) = \Delta C_2(Z) = -arc \sin \frac{e(Z) \cdot \sin (C + C_e(Z))}{X_0} \approx \frac{-e(Z) \cdot \sin (C + C_e(Z))}{X_0}$$

$$\Delta X(Z) = e(Z) \cdot \cos (C + C_e(Z)) - X_0 \cdot (1 - \cos \Delta C_2(Z)),$$

- in which $X_0$ designates the axial distance between the tool and the workpiece with a trouble-free clamping of the workpiece, and
- the workpiece is cut with the setting data (SD) superimposed in this way.

2. A method according to Claim 1, **characterized in that**
   - the workpiece is clamped in an exclusively eccentric manner,
   - the eccentricity is determined in accordance with the amount (e) and the phase angle ($C_e$), and
   - only the axes
   X for the axial distance between the tool and the workpiece
   Z for the position of the tool in the direction of the workpiece axis
   $C_0$ for the rotation of the tool
   $C_2$ for the rotation of the workpiece
   are used, and
   - corrections are superimposed upon the movements required for cutting a workpiece clamped in a trouble-free manner, in which the corrections assume the following values in the case in which the angle of rotation C = 0 is situated on the X axis:

$$\Delta C_0 = \Delta C_2 = -arc \sin \frac{e \cdot \sin (C + C_e)}{X_0} \approx \frac{-e \cdot \sin (C + C_e)}{X_0}$$

$$\Delta X = e \cdot \cos (C + C_e) - X_0 \cdot (1 - \cos \Delta C_2),$$

in which $X_0$ designates the axial distance between the tool and the workpiece with a trouble-free clamping of the workpiece, and
   - the workpiece is cut with the setting data (SD) superimposed in this way.

**Revendications**

1. Procédé pour l'usinage par enlèvement de matière dans des engrenages sensiblement cylindriques à denture intérieure ou extérieure, dans lequel la pièce à oeuvrer n'est pas exactement orientée sur la machine d'usinage, et dans lequel l'axe de guidage (F) de l'engrenage, qui doit devenir plus tard un axe de rotation dans le mécanisme, ne coïncide donc pas avec l'axe de rotation (D) sur la machine d'usinage et par conséquent, lorsque la table ou la broche portant la pièce à oeuvrer tourne, l'axe de guidage (F) effectue une nutation autour de l'axe de rotation (D), et la position de l'axe de guidage (F) est déterminée par rapport à l'axe de rotation (D) de la machine d'usinage et la denture est générée autour de l'axe de guidage (F),
   **caractérisé en ce que**

   - le procédé d'usinage est un procédé de rabotage de profil ou un procédé de rabotage en développante, et
   - on utilise uniquement les axes
   X pour la distance axiale outil/pièce à oeuvrer
   Z pour la position de l'outil en direction de l'axe de la pièce à oeuvrer

$C_0$ pour la rotation de l'outil

$C_2$ pour la rotation de la pièce à oeuvrer, et

- la position de l'axe de guidage (F) par rapport à l'axe de rotation (D) de la machine d'usinage est déterminée au moyen de e(Z) et Ce(Z), Z étant le plan respectivement considéré perpendiculaire à l'axe de rotation (D), et Ce(Z) étant l'angle de phase de l'excentricité e(Z) dans le plan (Z), et

- au mouvement nécessaire pour l'usinage d'une pièce à oeuvrer parfaitement prise sont superposées des corrections, et dans le cas où l'angle de rotation C = 0 est situé sur l'axe X, les corrections adoptent les valeurs suivantes:

$$\Delta C_0(Z) = \Delta C_2(Z) = - \arcsin [e(Z) \cdot \sin (C + Ce(Z))]/X_0 \approx [- e(Z) \cdot \sin (C + Ce(Z))]/X_0$$

$$\Delta X(Z) = e(Z) \cdot \cos (C + Ce(Z)) - X_0 \cdot (1 - \cos \Delta C_2(Z))$$

- dans lesquelles $X_0$ caractérise la distance axiale outil/pièce à oeuvrer lorsque la pièce à oeuvrer est parfaitement prise, et

- on usine la pièce à oeuvrer avec les données de positionnement (ED) ainsi superposées.

2. Procédé selon la revendication 1,
**caractérisé en ce que**

- la pièce est prise de façon purement décentrée,
- l'excentricité est déterminée quant à son amplitude (e) et son angle de phase (Ce), et

on utilise uniquement les axes

X pour la distance axiale outil/pièce à oeuvrer

Z pour la position de l'outil en direction de l'axe de la pièce à oeuvrer

$C_0$ pour la rotation de l'outil

$C_2$ pour la rotation de la pièce à oeuvrer, et

au mouvement nécessaire pour l'usinage d'une pièce à oeuvrer parfaitement prise, on superpose des corrections, et dans le cas où l'angle de rotation C = 0 est situé sur l'axe X, les corrections adoptent les valeurs suivantes:

$$\Delta C_0 = \Delta C_2 = - \arcsin [e \cdot \sin (C + Ce)]/X_0 \approx [- e \cdot \sin (C + Ce)]/X_0$$

$$\Delta X = e \cdot \cos (C + Ce) - X_0 \cdot (1 - \cos \Delta C_2)$$

dans lesquelles $X_0$ caractérise la distance axiale outil/pièce à oeuvrer lorsque la pièce à oeuvrer est parfaitement prise, et

- on usine la pièce à oeuvrer avec les données de positionnement (ED) ainsi superposées.

Fig. 1

EP 1 319 457 B2

Fig.2

Fig.3

Fig. 4

Fig. 5

16

Fig. 6

EP 1 319 457 B2

$$\overline{M_2 M_0} = \overline{M_2' M_0'} = \overline{M_2' M_0''} = X_0$$

Fig. 7

$$\overline{M_2 M_0} = \overline{M_2' M_0'} = \overline{M_2' M_0''} = X_0$$

Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3712454 A
- DE 19631620 A
- DE 4112122 C2